# EUROPEAN PATENT APPLICATION

(11) **EP 4 360 523 A1**
(43) Date of publication of application: **01.05.2024**
(21) Application number: 23181913.7
(22) Date of filing: 27.06.2023
(51) Int. Cl.: A47L 1/05, A47L 1/02

(54) **SELF-PROPELLED DEVICE**

(30) Priority: 24.10.2022 CN 202211300111
(71) Applicant: Hobot Technology Inc., Chupei City, Hsinchu County 30274 (TW)
(72) Inventor: Chao, Chi-Mou, Zhubei City, Hsinchu County 302 (TW); Wu, Hsin-Hui, Zhubei City, Hsinchu County 302 (TW)
(74) Representative: Lang, Christian

(57) **Abstract**

A self-propelled device includes a body, a walking module, an air extraction module, an air pressure sensor and at least one bumper structure. The body is defined with a first space and a second space in communication with the first space, wherein the volume of the second space is smaller than the volume of the first space and the second space is closer to a side of the body than the first space. The walking module is adjacent to the body. The air extraction module is arranged on the body and is in communication with the first space. The air pressure sensor is arranged on the body and disposed at one end of the second space. The bumper structure is relatively movably arranged on the body, and is configured to close the second space when located at a first position and open the second space when located at a second position. The self-propelled device is for walking on a board surface.

## Description

### CROSS-REFERENCE TO RELATED APPLICATIONS

This application claims priority of No. CN202211300111.5 filed in China on 2022/10/24, the entire content of which is hereby incorporated by reference.

### BACKGROUND OF THE INVENTION

### FIELD OF THE INVENTION

The present invention relates to the technical field of cleaning apparatuses and, more particularly, to a self-propelled device.

### DESCRIPTION OF THE PRIOR ART

Conventional methods for cleaning windows of households involve opening or removing the windows for cleaning. For windows of a building, a suspension frame is set up outside the building, the suspension frame is controlled to ascend or descend using a motor, and the windows outside the building are then cleaned by brushes or water jets. However, a suspension frame has an unstable center of gravity and thus is susceptible to swinging when blown by the wind. In order to prevent excessive brushing and cleaning of windows that may cause slipping of cleaning staff or injuries resulted from falling of cleaning tools, windows can be washed only by mild water streams, in a way that the windows may not be thoroughly cleaned.

The China Patent Publication No. CN 113928434 A discloses a self-propelled device including a body, a walking module, an air extraction module and an air pressure sensor. The body is defined with a first space and a second space in communication with the first space, wherein the volume of the second space is smaller than the volume of the first space and the second space is closer to a side of the body than the first space. The walking module is adjacent to the body. The air extraction module is arranged on the body and is in communication with the first space. The air pressure sensor is arranged on the body and disposed at one end of the second space. The self-propelled device is for walking on a board surface. According to the prior art, in case that a window cleaning machine exceeds an edge of a door/window while traveling, air leakage of a suction disk can be determined, that is, it is determined falling is likely to occur if traveling beyond the edge of the door/window takes place. Thus, such continual movement in an outer direction of the edge of the door/window is stopped.

However, according to disclosures of the prior art, when a conventional door/window cleaning robot bumps into an edge of a door/window while traveling, such occurrence can be learned merely through sensing a resistance by a walking module. Moreover, due to bumping against the edge of the door/window, the suction disk may become curved and cause air leakage, in a way that the cleaning robot becomes incapable of securely sucking on the surface of the door/window. Therefore, there is a need for improvement of current cleaning robots, so as to enable cleaning robots to determine whether or not they are about to bump into an edge of a door/window or an obstacle, and thus stop continuing moving toward the outer direction of the edge of the door/window.

### SUMMARY OF THE INVENTION

The embodiments of the present invention relate to a self-propelled device to solve the technical problems of the prior art regarding when a conventional door/window cleaning robot bumps into an edge of a door/window while traveling, such occurrence can be learned merely through sensing a resistance by a walking module, and due to bumping against the edge of the door/window, the suction disk may become curved and cause air leakage, in a way that the cleaning robot becomes incapable of securely sucking on the surface of the door/window.

A self-propelled device of the present invention includes: a body, defined with a first space and a second space in communication with the first space, wherein the volume of the second space is smaller than the volume of the first space, and the second space is closer to a side of the body than the first space; a walking module, being adjacent to the body; an air extraction module, arranged on the body, being in communication with the first space; an air pressure sensor, arranged on the body, and disposed at one end of the second space; and at least one bumper structure, relatively movably arranged on the body, configured to close the second space when located at a first position and open the second space when located at a second position. The self-propelled device is for walking on a board surface.

In one embodiment, the body further includes a connecting passage, and the second space is in communication with the first space via the connecting passage.

In one embodiment, the at least one bumper structure is arranged at the body, and includes a bumper panel and a blocking bar. An outer surface of the bumper panel faces an outside of the body. The blocking bar is connected to the bumper panel, extends from the bumper panel toward the second space, and closes the second space when the at least one bumper structure is located at the first position.

In one embodiment, the body further includes: a carrier board, being close to an upper part of the body, including a first carrier board opening; and a suction disk, being close to a lower part of the body, connected to the carrier board, including a first suction disk opening corresponding to the first carrier board opening, the suction disk and the first carrier board opening forming the first space. The at least one bumper structure is arranged at the suction disk, and the outer surface of the bumper panel faces an outside of the suction disk.

In one embodiment, the carrier board includes a carrier board wall encircling the first carrier board opening, the suction disk includes a first suction disk wall encircling the first suction disk opening, and the carrier board wall and the first suction disk wall are joined with each other so that the carrier board wall is movable relative to the first suction disk wall.

In one embodiment, the carrier board further includes a second carrier board opening, the suction disk includes a second suction disk wall and a second suction disk opening, the second suction disk wall encircles the second suction disk opening, the second suction disk opening includes a second suction disk hole passing through the suction disk, and the second suction disk wall passes through the second carrier board opening. The second suction disk wall includes a blocking hole, and the blocking bar extends to the blocking hole. Preferably, the air pressure sensor is arranged on a substrate, and the second suction disk wall is sealed by the substrate to form the second space.

In one embodiment, the at least one bumper structure further includes an elastic element. The elastic element is located between the suction disk and the bumper panel, and configured to transmit an impact force from the bumper panel to the blocking bar when the self-propelled device bumps into an obstacle for the blocking bar to move relative to the blocking hole.

In one embodiment, a cleaning cloth is further included. The cleaning cloth is arranged below the suction disk, and is for coming into contact with the board surface. The cleaning cloth has a plurality of cleaning cloth holes respectively disposed below the first suction disk opening and the second suction disk opening. In one embodiment, the connecting passage is arranged on a lower surface of the suction disk, and the second suction disk opening is in communication with the connecting passage.

In one embodiment, the body further includes a third space in communication with the second space. An upper side of the third space faces the lower surface of the suction disk, and is in communication with the second space via the second suction disk hole. A lateral side of the third space faces the connecting passage and is communication with the connecting passage. A lower side of the third space faces the cleaning cloth, and is exposed from the cleaning cloth hole of the cleaning cloth when a part of the self-propelled device exceeds the board surface.

In one embodiment, the body of the self-propelled device further includes a third space. The third space is configured such that, the third space is in communication with the second space and is in communication with the first space via the connecting passage. When an edge of the self-propelled device exceeds the board surface, the second space is in communication with an exterior via the third space, and the first space is in communication with the exterior via the connecting passage and the third space.

In one embodiment, a sum of the volumes of the second space, the connecting passage and the third space is smaller than the volume of the first space. The blocking bar includes a blocking section and a connecting section. The connecting section is connected between the bumper panel and the blocking section, and a cross section area of the blocking section is coordinated with the area of the blocking hole. When the at least one bumper structure is located at the first position, the blocking section closes the blocking hole. A cross section area of a part of the connecting section close to the blocking section is smaller than an area of the blocking hole. When the at least one bumper structure is located at the second position, the part of the connecting section close to the blocking section opens the blocking hole.

The embodiments of the present invention relate to a self-propelled device, including: a suction disk, including a first suction disk wall arranged at a center of the suction disk and defined with a first suction disk opening, a plurality of second suction disk walls being close to edges of the suction disk, the plurality of second suction disk walls respectively defining a plurality of second suction disk openings and defining a blocking hole, and a plurality of connecting passages arranged on the suction disk and being in communication with the first suction disk opening and the second suction disk openings; a plurality of bumper structures, relatively movably arranged on the suction disk, including bumper panel and a blocking bar, the bumper panel configured to be adjacent to an edge of the suction disk, the blocking bar connected to the bumper panel and extending to the blocking hole; and a carrier board, arranged on the suction disk, including a carrier board wall arranged at a center of the carrier board and defined with a first carrier board opening; and a plurality of second carrier board openings being close to edges of the carrier board, the second suction disk walls passing through the second carrier board openings; a walking module, being adjacent to the suction disk; a plurality of air pressure sensors, arranged on a substrate, the substrate arranged on the carrier board and covering the second suction disk walls; and an air extraction module, arranged on the carrier board wall of the carrier board. The self-propelled device is for walking on a board surface.

In one embodiment, the at least one bumper structure is configured to be movable between the first position and the second position. The blocking bar includes a blocking section and a connecting section. The connecting section is connected between the bumper panel and the blocking section, and a cross section area of the blocking section is coordinated with an area of the blocking hole. When the at least one bumper structure is located at the first position, the blocking section closes the blocking hole. A cross section area of a part of the connecting section close to the blocking section is smaller than an area of the blocking hole. When the at least one bumper structure is located at the second position, the part of the connecting section close to the blocking section opens the blocking hole.

In one embodiment, the self-propelled device further includes: a first space, including an internal space formed after the carrier board wall and the first suction disk wall are joined; and a second space, including an internal space of the second suction disk wall, the second space being in communication with the first space via the connecting passage, the air pressure sensor being for measuring an air pressure in the second space. A sum of the volumes of the second space and the connecting passage is smaller than the volume of the first space.

In one embodiment, the suction disk has a first surface and a corresponding second surface, the first suction disk wall and the second suction disk wall protrude from the first surface, and the height of the second suction disk wall is greater than the height of the first suction disk wall.

In one embodiment, a cleaning cloth is further included. The cleaning cloth is adhered to the second surface of the suction disk and is for coming into contact with the board surface. The second surface of the suction disk includes a plurality of shallow grooves for configuring hooks and loops so as to adhere with the cleaning cloth. In one embodiment, the suction disk further includes a plurality of channels. The channels are close to the edges of the suction disk, and the second suction disk holes are arranged on a bottom part of the channels. In one embodiment, each channel includes a plurality of branches, and the branches extend from the second surface of the suction disk toward at least two non-parallel directions. In one embodiment, the cleaning cloth includes a plurality of cleaning cloth holes, and the cleaning cloth holes overlap with the channels in a perpendicular direction. In one embodiment, the connecting passage is close to the first surface of the suction disk, and one end thereof is in communication with a sidewall of the first suction disk wall and the other end thereof is in communication with a sidewall of the second suction disk wall.

### BRIEF DESCRIPTION OF THE DRAWINGS

Aspects of the present disclosure can be better understood by reading the following embodiments in combination with the accompanying drawings below. It should be noted that, the structures are not drawn to scales according to a standard practice in this industry. In fact, for description clarity, the sizes of the various structures may be upscaled or downscaled as desired.
FIG. 1 is an exploded structural diagram of a self-propelled device according to an embodiment of the present invention;
FIG. 2 is another exploded structural diagram of a self-propelled device according to an embodiment of the present invention;
FIG. 3 is a top view of a suction disk according to some embodiments of the present invention;
FIG. 4 is a sectional schematic diagram according to some embodiments of the present invention to show correspondence among a first space, a second space and a third space, and technical features of the position of a connecting passage;
FIG. 5 is a partial enlarged perspective diagram of a suction disk according to some embodiments of the present invention;
FIG. 6A is an exploded diagram of a suction disk and a bumper structure of a self-propelled device according to an embodiment of the present invention;
FIG. 6B is a perspective diagram of assembly of a suction disk and a bumper structure located at a first position of a self-propelled device according to an embodiment of the present invention; and
FIG. 6C is a perspective diagram of assembly of a suction disk and a bumper structure located at a second position of a self-propelled device according to an embodiment of the present invention.

### DETAILED DESCRIPTION OF THE EMBODIMENTS

The disclosure below provides various different embodiments or examples of different components used to implement the subject matter of the disclosure. Specific examples of components and configurations are given in the description below to simplify the disclosure. It should be noted that these components and configurations are exemplary and are not to be intended to be restrictive. For example, in the description below, a first component formed on or above a second component may include an embodiment in which the first component and the second component are formed in a direct contact manner, and may also include an embodiment in which an additional component is formed between the first component and the second component in a way that the first component and the second component may not be in direct contact. Moreover, reference numerals and/or alphabetical symbols may be repeated in the various embodiments of the disclosure. Such repetition is intended for simplicity and clarity and does not represent relations between the embodiments and/or configurations.

Further, for better description, relative spatial terms such as "below", "under", "underneath", "above", "on", and "over" and the like may be used to describe the relation between one element or component and other element(s) or component(s) as given in the drawings. In addition to the orientation depicted in the drawings, the relative spatial terms are also intended to cover different orientations of a device in use or operation. An apparatus may be orientated by other means (rotated by 90 degrees or having another orientation).

The present invention relates to a self-propelled device, which can stay attracted to an inclined or vertical planar surface, and freely move on the inclined or vertical planar surface without falling off as a result of the attraction of gravity. In some embodiments, the self-propelled device can be a toy, a remote controlled car, a cleaning machine or a window cleaner, wherein the cleaning machine or window cleaner has a cleaning function, and can clean the surface on which it is attracted while moving and achieve the object of surface cleaning by moving back and forth on the planar surface. A cleaning machine or a window cleaner is given as an example below for illustration purposes; however, the present invention is not limited to being a cleaning machine or a window cleaner.

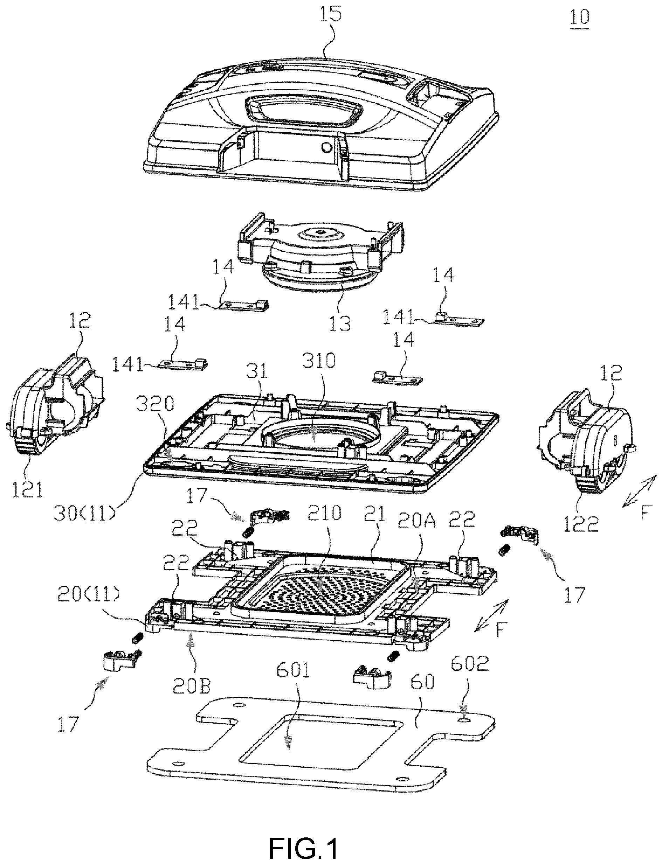

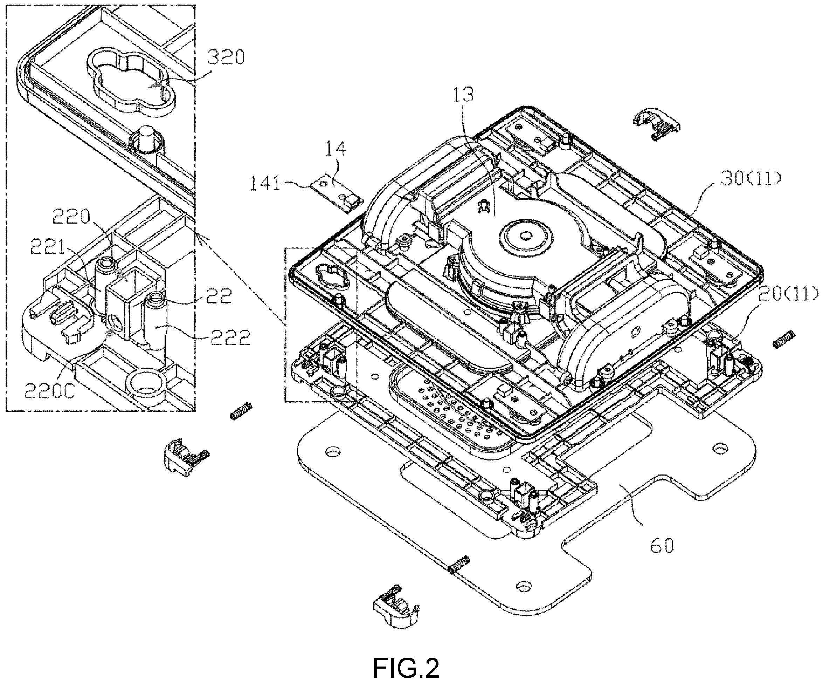

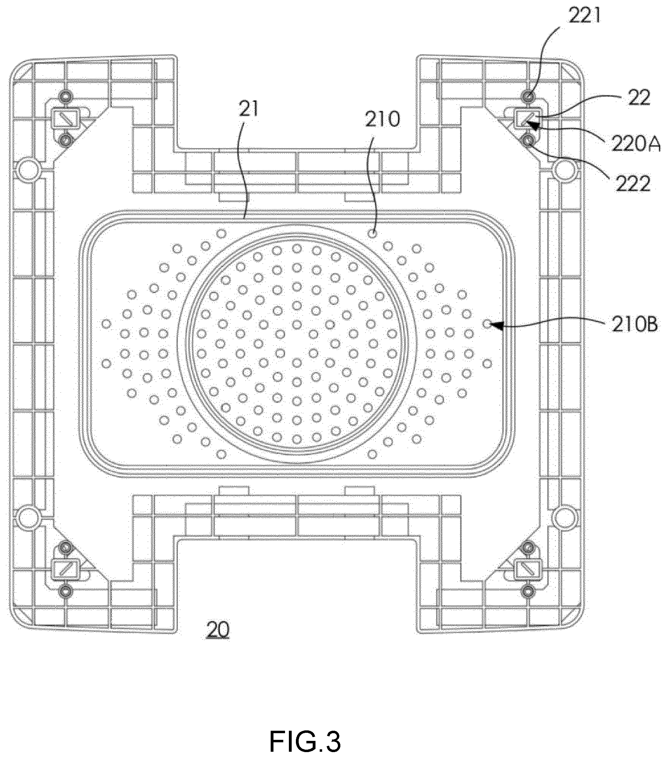

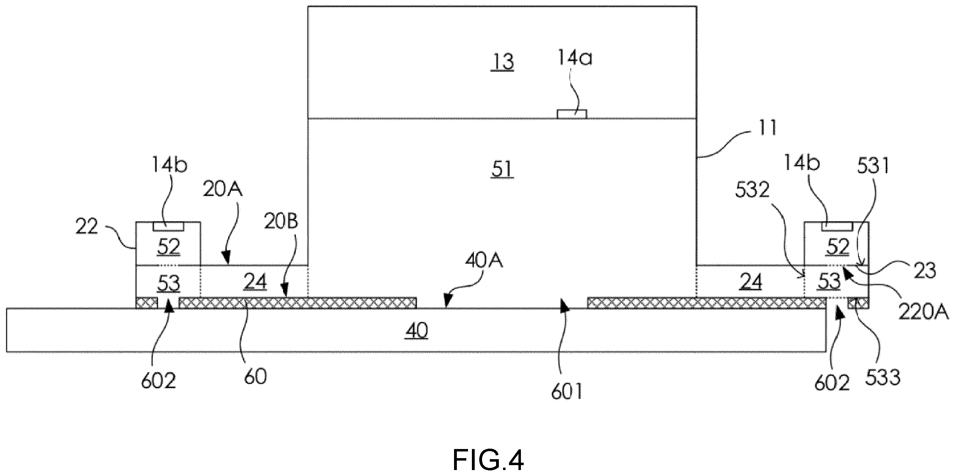

FIG. 1 shows an exploded structural diagram of a self-propelled device according to an embodiment of the present invention. FIG. 2 shows another exploded structural diagram of a self-propelled device according to an embodiment of the present invention. FIG. 3 shows a top view of a suction disk according to some embodiments of the present invention. FIG. 4 shows a sectional schematic diagram according to some embodiments of the present invention to show correspondence relation among a first space, a second space and a third space, and technical features of the position of a connecting passage.

As shown in FIG. 1 and FIG. 2, in some embodiments, a self-propelled device 10 includes at least one bumper structure 17, a body 11, a walking module 12, an air extraction module 13 and a plurality of air pressure sensors 14. In the embodiment in FIG. 1, the self-propelled device 10 includes multiple bumper structures 17. The walking module 12 is arranged on two corresponding sides of the body 11, and both the air extraction module 13 and the air pressure sensors 14 are arranged on the body 11. The bumper structure 17 is configured to sense impact from an obstacle when the self-propelled device 10 bumps into the obstacle, and thereby notifies the self-propelled device 10 to stop continuing moving forward. More specifically, as shown in FIG. 2, the bumper structure 17 is relatively movably arranged on the body 11, and is configured to close a second space 52 when located at a first position and open the second space 52 when located at a second position.

In some embodiments, the self-propelled device is adapted to be attached to a board 40 (as shown in FIG. 4) and to move on a board surface by the walking module 12, so as to clean dust or stains on the board surface. In some embodiments, the board can be a vertical window. As shown in FIG. 1, the walking module 12 can include walking components 121 and 122, which can be elements capable of generating movement, such as pulleys and rollers, so as to drive the self-propelled device to move forward, reverse or turn on the board surface. In the embodiment shown, the walking components 121 and 122 are pulleys, and include a crawler and two driving wheels driving the crawler.

In order to enable the self-propelled device to move on a non-horizontally placed board without falling off, the present invention achieves the object of staying attracted to the board surface by a combination of the body 11 and the air extraction module 13. More specifically, in some embodiments, the body 11 includes a suction disk 20 and a carrier board 30, and the body 11 can be configured such that the suction disk 20 and the carrier board 30 are stacked on one another, so that the carrier board 30 is close to the upper part of the body 11 and the suction disk 20 is close to the lower part of the body 11. In some embodiments, the walking module 12 can be connected to the body 11. More specifically, the walking module 12 can be disposed in the body 11 or be directly leaning on the body 11. In some embodiments, the walking module 12 can be adjacent to two sides of the suction disk 20. The air extraction module 13 is arranged on the carrier board 30, and extracts air in a direction from the carrier board 30 to the air extraction module 13, such that air near the board surface is extracted from the board surface through the suction disk 20 and the carrier board 30 and outputted from the air extraction module 13, thereby generating a negative pressure between the self-propelled device 10 and the board surface. Thus, a force is produced by atmospheric pressure upon the self-propelled device 10 to attract the self-propelled device 10 on the board surface. In one embodiment, the air extraction module 13 includes a pump.

More specifically, the present invention can be implemented among the board surface, the body 11 and the air extraction module 13 to form a negative-pressure space allowing the self-propelled device to move on a non-horizontally placed board without falling off. In some embodiments, the space having a negative pressure formed therein can be further divided into a first space 51 and a second spaced 52 defined by the body 11 (as shown in FIG. 4), wherein the first space 51 is in communication with the second space 52. More specifically, the differentiation between the first space 51 and the second space 52 is achieved by the structures of the suction disk 20 and the carrier board 30.

In one embodiment, the plurality of air pressure sensors 14 are for measuring air pressure in the self-propelled device 10, for example in one embodiment, measure air pressures in the first space 51 and the second space 52, respectively, and can measure a negative-pressure state produced by air extraction of the air extraction module 13. Thus, when a change in the negative-pressure state occurs, it can be accordingly determined whether or not the closure between the first space and the second space is changed.

In some embodiments, the self-propelled device includes a housing 15 having an accommodating space therein for accommodating the bumper structure 17, the body 11, the walking module 12, the air extraction module 13 and the plurality of air pressure sensors 14. In some embodiments, the self-propelled device includes a spray module (not shown) which can be embedded in the housing 15 or attachable or adherable to the housing 15 for spraying a cleaning liquid such as clean water or a cleaning agent.

In some embodiments, the self-propelled device includes a cleaning cloth 60, which is adhered to a second surface 20B of the suction disk 20 and is for coming into contact with a board surface 40A (as shown in FIG. 4). In some embodiments, an outer surface of the cleaning cloth 60 has fibers for cleaning, and includes an elastic plastic plate therein as an internal lining structure thereof. Thus, in addition to including a first cleaning cloth hole 601 and a plurality of second cleaning cloth holes 602, the cleaning cloth 60 has a shielding effect of prohibiting air to pass through.

In some embodiments, the suction disk 20 has a first surface 20A (that is, an upper surface of the suction disk 20) and a corresponding second surface 20B (that is, a lower surface of the suction disk 20). At the first surface 20A, the suction disk 20 includes a sealing structure for forming part of sidewalls of the first space 51 and the second space 52. In some embodiments, the suction disk 20 includes a first suction disk wall 21 and a plurality of second suction disk walls 22 protruding from the first surface 20A. The first suction disk wall 21 is located at the center of the suction disk 20, and an interior thereof serves as a part of the first space 51. The second suction disk walls 22 are respectively close to edges of the suction disk 20, and interiors thereof serve as a part of the second space 52. In some embodiments, the appearance of the suction disk 20 is similar to an H-shaped structure, and thus four second suction disk walls 22 are respectively located on four branches structurally extended from the suction disk 20. In some embodiments, the volume of the second space 52 is smaller than the volume of the first space 51. Further, in one embodiment, the first suck disk wall 21 and the plurality of second suction disk walls 22 can also be not protruding from the first surface 20A.

Again referring to FIG. 1, in some embodiments, the carrier board 30 arranged on the suction disk 20 has a carrier board wall 31, which is located at the center of the carrier board 30 and is for mutually joined with the first suction disk wall 21 so as to form a sealed structure. Moreover, the carrier board wall 31 is still movable relative to the first suction disk wall 21. For example, the carrier board wall 31 can protrude toward one surface back facing the suction disk 20, and has a corresponding slot (not shown) on one surface of the carrier board 30 facing the suction disk 20, allowing the first suction disk wall 21 to be inserted in the slot. In some embodiments, the body 11 can include at least one pivotal shaft (not shown) for limiting a vertical movement direction of the joined carrier board 30 and suction disk 20, such that the self-propelled device is maintained with a certain level of thickness change in the vertical direction without having the carrier board 30 and the suction disk 20 separate from each other. For example, the pivotal shaft can be near a corner of the suction disk 20, be fixed on the suction disk 20 and extend in the direction of the carrier board 30. The carrier board 30 can then be movably connected to the suction disk 20 by means of the pivotal shaft. During the process of increasing or decreasing the thickness of the self-propelled device, the volume of the first space 51 also correspondingly increases or decreases.

More specifically, in some embodiments, the carrier board 30 is provided with a plurality of through holes, and the pivotal shaft passes through these through holes. The length of the pivotal shaft is greater than the length of the corresponding through hole, allowing the suction disk 20 to be pivotally connected to the carrier board 30 by the pivotal shaft, and allowing the suction disk 20 to move along the long axis of the pivotal shaft. As such, the suction disk 20 can produce relative movement via the pivotal shaft and the carrier board 30, and can be driven by the carrier board 30. In a preferred situation, the long axis of the pivotal shaft is substantially parallel to the normal direction of the bottom surface of the suction disk 20, allowing the suction disk 20 to move in the normal direction.

FIG. 3 shows a top view of the suction disk 20 represented from the first surface 20A of the suction disk 20. As shown in FIG. 3, in some embodiments, the suction disk 20 has a first suction disk opening 210 and a plurality of second suction disk openings 220. In some embodiments, the first suction disk opening 210 is defined by the first suction disk wall 21; for example, the first suction disk wall 21 encircles the first suction disk opening 210. The second suction disk openings 220 are defined by the second suction disk wall 22; for example, the second suction disk wall 22 encircles the second suction disk openings 220. In some embodiments, the region defined by the first suction disk wall 21 before being sealed is the first suction disk opening 210, and forms the first space or at least a part of the first space after being sealed. In some embodiments, the region defined by the second suction disk wall 22 is the second suction disk opening 220 before being sealed, and forms the second space or at least a part of the second space after being sealed.

In some embodiments, the first suction disk opening 210 can include a plurality of first suction disk holes, which pass through the suction disk 20 and are distributed within a range encircled and defined by the first suction disk wall 21. The profile of the first suction disk hole can be an arc hole or a circular hole (as the first suction disk hole 210B shown in FIG. 3). The second suction disk opening 220 can include a second suction disk hole 220A passing through the suction disk 20 (as shown in FIG. 3 and FIG. 4). In some embodiments, the specific structure of the second suction disk hole 220A can be featured as a slit-like hole or a strip-like hole passing through the suction disk 20. The size of the second suction disk hole 220A is smaller than the range encircled and defined by the second suction disk wall 22. In some embodiments, the size of the second suction disk hole 220A is between 4% and 50% of the range encircled and defined by the second suction disk wall 22. In this embodiment, the second suction disk hole 220A having a size that is not greater than 50% of the range encircled and defined by the second suction disk wall 22 can better prevent dust or water drops from entering the second suction disk opening 220 via the second suction disk hole 220A, that is, the second space enclosed by the two suction disk wall 22, thereby ensuring a longer durability of the air pressure sensors 14 in the second space (details of the configuration of the air pressure sensors 14 are provided below). On the other hand, the second suction disk hole 220A having a size that is not smaller than 4% of the range encircled and defined by the second suction disk wall 22 can ensure that a sufficient amount of air can flow into the second space, so that an adequately apparent change in the negative pressure of the second space can be detected when the movement of the self-propelled device exceeds the edge of the board surface (details of the relation between the second suction disk hole 220A and the movement position of the self-propelled device are provided below).

As shown in FIG. 1, in some embodiments, the height of the second suction disk wall 22 is greater than the height of the first suction disk wall 21. Again referring to FIG. 1 and FIG. 2, in some embodiments, the carrier board 30 has a first carrier board opening 310 and a plurality of second carrier board openings 320 (referring to FIG. 2). In some embodiments, the first carrier board opening 310 is defined by the carrier board wall 31, and for example, the carrier board wall 31 encircles the first carrier board opening 310. The second carrier board openings 320 are provided on the carrier board 30. In some embodiments, the second carrier board openings 320 are respectively close to the edges of the carrier board 30, and are aligned in the vertical direction with the second suction disk walls 22 of the suction disk 20 below the carrier board 30. In some embodiments, an inner peripheral shape of the second carrier board opening 320 corresponds to an outer peripheral shape of the second suction disk wall 22. For example, the inner peripheral shape of the second carrier board opening 320 is slightly greater than the outer peripheral shape of the second suction disk wall 22, such that the second suction disk wall 22 passes through the second carrier board opening 320, and the suction disk 20 and the carrier board 30 can accordingly move in the vertical direction along the structure of the second suction disk wall 22 by the joining means of the second suction disk wall 22 passing through the second carrier board opening 320.

As previously described, during the operation of the present invention, the air extraction module 13 extracts air near the board surface through the suction disk 20 and the carrier board 30 out of the air extraction module 13. In coordination with the disclosed structure, part of air in a flow path in the self-propelled device in fact enters the space enclosed by the first suction disk wall 21 through the first suction disk opening 210 of the suction disk 20 (for example, through the first suction disk hole passing through the suction disk 20), enters the space defined by the carrier board wall 31 through the first carrier board opening 310 of the carrier board 30, and is then extracted by the air extraction module 13 located on the carrier board 30. In other words, the first space defined by the body 11 according to an embodiment of the present invention substantially includes the space enclosed and defined by the board, the first suction disk wall 21 and the carrier board wall 31, and has one end thereof covered by the air extraction module 13.

As shown in FIG. 4, in some embodiments, the board surface 40A can serve as one end that seals the first space 51, and air is extracted by the air extraction module 13 covering the other end of the first space 51, such that the first space 51 is provided with a negative pressure, further allowing the self-propelled device to move on a non-horizontally placed board without falling off.

In some embodiments, the second space 52 is substantially defined by the space enclosed by the second suction disk wall 22, and has one end thereof covered by the air pressure sensor 14 or a substrate 141 on which the air pressure sensor 14 is attached. More specifically, the interior of the second suction disk wall 22 serves as at least a part of the second space 52, and because one end of the second suction disk wall 22 is covered by the substrate 141 on which the air pressure sensor 14 is attached, the substrate 141 at the same time seals one end of the second space 52. In some embodiments, the substrate 141 is a printed circuit board, and the air pressure sensor 14 is electrically connected to a circuit of the substrate 141 and can power the air pressure sensor 14 and output air pressure information obtained thereby. The other end of the second space 52 is the second suction disk hole 220A provided at the suction disk 20 (as shown in FIG. 3). The second suction disk hole 220A allows the second space 52 to be in direct or indirect in communication with the first space 51 (as shown in FIG. 4), for example, being in communication with the first space 51 via a connecting passage 24, or further be first in communication with a third space 53 and then be in communication with the first space 51 via the connecting passage 24. As previously described, the first space 51 is provided with a negative pressure due to the air extraction of the air extraction module 13, and it is thus known that, when the air extraction module 13 extracts air, the second space 52 in communication with the first space 51 is also provided with a negative pressure since the air in the second suction disk wall 22 enters the first space via the second suction disk hole 220A and is extracted.

The air pressure sensors 14 are configured to measure the air pressure of the second space 52. In some embodiments, the air pressure sensors 14 can be arranged on one side of the substrate 141 facing the interior of the second suction disk wall 22. In some embodiments, the air pressure sensors 14 can be arranged on a surface inside the second suction disk wall 22 instead of being arranged on the substrate 141, such that the substrate 141 provides only the function of sealing one end of the second suction disk wall 22 without being able to carry the air pressure sensors 14. In some embodiments, positioning columns 221 and 222 are provided on two sides of the second suction disk wall 22 (as shown in FIG. 2), and the substrate 141 can be locked at the positioning columns and seal one end of the second suction disk wall 22. In other words, in some embodiments of the present invention, the substrate 141 is not connected to the carrier board 30 but seals one end of the second suction disk wall 22, and is located above the carrier board 30 and moves along with the movement of the suction disk 20 because the second suction disk wall 22 passes through the second carrier board opening 320 of the carrier board 30. In some embodiments, the outer peripheral shape of the substrate 141 does not correspond to the inner peripheral shape of the second carrier board opening 320; for example, the outer peripheral shape of the substrate 141 is greater than the inner peripheral shape of the second carrier board opening 320. Thus, the substrate 141 locked at the positioning columns 221 and 222 can prevent the second suction disk wall 22 from disengaging from the second carrier board opening 320, that is, the suction disk 20 and the carrier board 30 do not separate from each other easily.

In one embodiment of the present invention, the second suction disk wall 22 is close to the edge of the suction disk 20, and thus the second suction disk opening 220 defined thereby is also close to the edge of the suction disk 20. Accordingly, when the self-propelled device 10 moves on the board surface 40A, if the self-propelled device 10 moves excessively toward one edge of the board surface 40A and even goes beyond the board surface 40A, a gap appears at the end of the second space 52 close to the board surface 40A earlier in time. That is to say, the closed state of the second space 52 is affected earlier in time than the closed state of the first space 51. In some embodiments, the change in the negative pressure of the second space 52 can be used to determine whether the self-propelled device has moved to the edge of the board surface 40A or even gone beyond the board surface 40A, thereby enabling the self-propelled device 10 to stop in real time continuously moving in a direction further away from the edge of the board surface 40A, or even to reverse and move in an opposite direction to accordingly again increase the negative pressure of the second space 52.

The present invention uses the negative pressure of the second space 52 to determine whether the self-propelled device 10 is about to fall off from the board surface 40A. In some embodiments, the average negative pressure of the first space 51 is greater than the average negative pressure of the second space 52, and this is because the negative pressure of the first space 51 is the main source providing the suction force attracting the self-propelled device 10 onto the board surface 40A and the first space 51 is closer to the air extraction module 13 located on the carrier board wall 31, while the negative pressure of the second space 52 is for determining whether the edge of the self-propelled device 10 has gone beyond the board surface 40A and so the second space 52 is farther away from the air extraction module 13 but closer to the edge of the self-propelled device 10. When the self-propelled device 10 has linearly moved slightly beyond the boundary of the board surface 40A, no significant change is caused in the negative pressure of the first space 51, with however the negative pressure of the second space 52 already starting to drop, and it can then be deduced that the edge of the self-propelled device has gone beyond the board surface at this point in time, such that the second suction disk hole 220A is no longer directly or indirectly shielded by the board surface. Thus, air can be supplemented into the second suction disk wall 22 through the second suction disk hole 220A, producing a change in the negative pressure value of the second space 52 detected by the air pressure sensors 14, and prompting reactive measures be taken in real time before the negative pressure value of the first space 51 also starts to change. For example, the self-propelled device can be configured to reverse at this point in time until the negative pressure value of the second space 52 is restored, or position information of the self-propelled device can be further integrated and analyzed to depict the profile of the board.

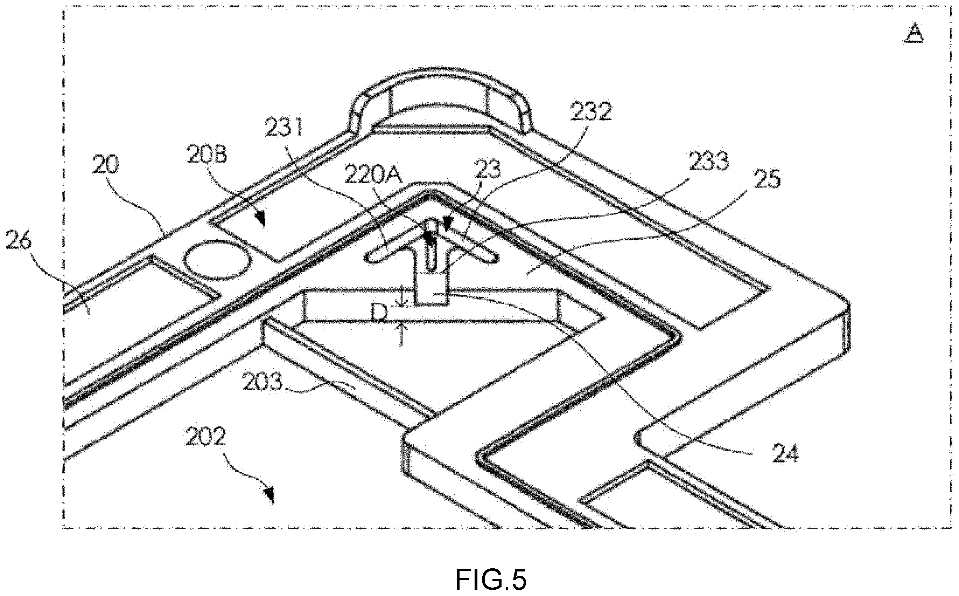

FIG. 5 shows a partial enlarged perspective diagram of a suction disk according to some embodiments of the present invention. As shown in FIG. 5 of a partial enlarged perspective diagram of the suction disk 20, the second suction disk hole 220A is located on an edge of the second surface 20B of the suction disk 20. In some embodiments, the second suction disk hole 220A on the second surface 20B is located on a bottom part of a channel 23. The channel 23 extends downward from a deck 25 of the second surface 20B. In some embodiments, the channel 23 features an arrow-like shape, with two arrow branches 231 and 232 extending in different directions on the second surface 20B of the suction disk 20, for example, in directions perpendicular to each other, and a main branch 233 of the arrow is substantially leveled with the slit-like hole or the strip-like hole of the second suction disk hole 220A and is connected to one end of the connecting passage 24 (with a border between the two as shown by the dotted line). In some embodiments, the other end of the connecting passage 24 is connected to an edge of a recessed region 202, and a height difference exists between the two. As shown in FIG. 5, between a bottom part of the connecting passage 24 and a bottom part of the recessed region 202 is a vertical distance D.

In some embodiments, the connecting passage 24 has a width of 1 mm to 10 mm and a depth of 1 mm to 4 mm. In some embodiments, the connecting passage 24 is for connecting the first space and the second space, for example, one end thereof is connected to the recessed region 202 that is a part of the first space and has a height difference of a vertical distance D from the recessed region 202, and the other end thereof is connected to the channel 23 provided with the second suction disk hole 220A. Further, if the cross section area of the connecting passage 24 is too small, air cannot pass the connecting passage 24 easily, that is, the air extraction module 13 cannot easily extract the air in the second space via the connecting passage 24. If the cross section area of the connecting passage 24 is too large, the states of changes in the negative pressures of the first space 51 and the second space 52 are too similar; for example, when the negative pressure of the second space 52 starts to drop, the negative pressure of the first space 51 also starts to drop, such that the self-propelled device 10 soon cannot be attracted to the board surface 40A and hence cannot provide an effect of early warning with respect to the position of the self-propelled device 10.

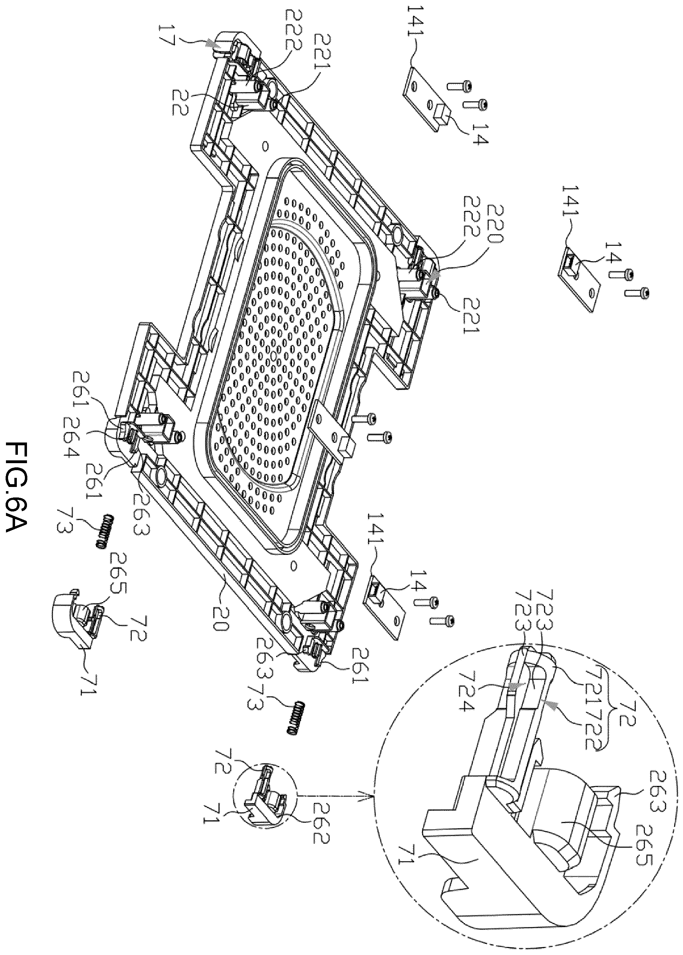

Referring to FIG. 1 and FIG. 6A, the function of the channel 23 is to communicate the second cleaning cloth holes 602 on the edge of the cleaning cloth 60 and the second suction disk hole 220A of the suction disk 20, and to provide an effect of better correspondence with respect to the second cleaning cloth holes 602 on the edge of the cleaning cloth 60. Thus, when the cleaning cloth 60 is adhered to the second surface 20B of the suction disk 20, in case that the adherence is not aligned or the cleaning cloth 60 is slightly deformed as a result of repeated washing, the second cleaning cloth holes 602 on the edge of the cleaning cloth 60 can still be overlapping with the channel 23 in the vertical direction, allowing air to enter the channel 23 via the second cleaning cloth holes 602, flow through the channel 23 and then enter the second space 52 via the second suction disk hole 220A, preventing the cleaning cloth 60 from completely blocking the channel 23 and hence from causing a failure of correctly detecting in real time the pressure drop by the air pressure sensor 14 in the second space 52. Therefore, preferably, the arrow branches 231 and 232 respectively extend toward different directions, thus providing a larger distribution position of the channel 23 opposite to the second cleaning cloth holes 602.

Further, in some embodiments, the cleaning cloth 60 can be adhered behind the suction disk 20; for example, the cleaning cloth 60 can be in direct contact with decks on two sides of the connecting passage 24 without coming into contact with the recessed region 202. In some other embodiments, the edges of the suction disk 20 can include a plurality of shallow grooves for configuring hooks and loops so as to adhere with the cleaning cloth 60.

In some embodiments, the channel 23 can independently define a third space 53, and is not defined as a part of the second space 52. In other words, in this embodiment, the second space 52 is limited to a space enclosed by the second suction disk wall 22, has one end thereof covered by the substrate 141 and the other end stopped at the second suction disk hole 220A, and is in communication with the third space defined by the structure of the second suction disk hole 220A in communication with the channel. More specifically, at this point in time, the third space 53 is in communication with the second space 52 via the second suction disk hole 220A, and the third space 53 is in communication with the first space 51 via the connecting passage 24. Thus, with respect to the air extraction module 13 providing the second space 52 with a mechanism of negative pressure by means of air extraction, the air in the second space 52 substantially leaves the second space 52 via the second suction disk hole 220A and enters the third space 53, leaves the third space 53 via the connecting passage 24, then leaves the connecting passage 24 and enters the first space 51, and is accordingly extracted by the air extraction module 13 from the first space 51.

The sectional schematic diagram of FIG. 4 discloses correspondence among the first space 51, the second space 52 and the third space 53 according to some embodiments of the present invention. In some embodiments, the cleaning cloth 60 is disposed between the suction disk 20 and the board 40. Further, in the present invention, the first cleaning cloth hole 601 at the center of the cleaning cloth 60 is in communication with the first suction disk opening (for example, in communication with the first suction disk hole 210A in FIG. 1) of the suction disk 20, allowing the negative pressure of the first space 51 to extend to the first cleaning cloth hole 601 and to maintain the ability of attracting the self-propelled device to the board 40. Further, the second cleaning cloth holes 602 on the edge of the cleaning cloth 60 are in communication with the second suction disk hole 220A of the suction disk 20, enabling air flow of the second space 52, the third space 53 and the exterior to allow the air pressure sensor 14b in the second space 52 to detect in real time a significant change occurring in the negative pressure value of the second space 52, so as to quickly appropriately adjust the location of the self-propelled device.

As shown in FIG. 4, taking the third space 53 on the right for example (associated structures on the left and right sides in FIG. 4 for defining the third space 53 are substantially the same, and a side position of the third space 53 is selectively denoted on the right for simplicity), an upper side 531 of the third space 53 faces the second surface 20B of the suction disk 20, and is in communication with the second space 52 via the second suction disk hole 220A, one lateral side 532 of the third space 53 faces the connecting passage 24 and is in communication with the connecting passage 24, and a lower side 533 of the third space 53 faces the cleaning cloth 60. More specifically, during the operation of the self-propelled device of one embodiment of the present invention, the channel 23 is covered by the cleaning cloth 60 because the second surface 20B of the suction disk 20 is adjacent to the board surface 40A of the board 40, such that the cleaning cloth 60 is used to clean the board surface 40A. However, when a part of the self-propelled device exceeds the board surface 40A, the third space 53 may become exposed outside the board surface 40A due to the second cleaning cloth holes 602 of the cleaning cloth 60, causing the third space 53 to be in communication with air of the exterior.

Further, the condition that the lower side 533 of the third space 53 is exposed to the outside via the second cleaning cloth holes 602 of the cleaning cloth 60 produces an influence on the negative pressure states of the first space 51 and the second space 52. More specifically, when the third space 53 is in communication with air of the exterior and is not shielded by the board 40, air can more easily enter the third space 53 via the second cleaning cloth holes 602 of the cleaning cloth 60. As a result, air is leaked from both the second space 52 in communication with the third space 53 and the first space 51 in communication with the third space 53 via the connecting passage 24, hence reducing the negative pressure effect generated by air extraction of the air extraction module 13 and deteriorating the ability of attracting the self-propelled device on the board 40. As described previously, the size of the cross section area of the connecting passage 24 is effectively designed in some embodiments of the present invention to accordingly increase the time difference between the pressure drop occurring in the second space 52 and the pressure drop occurring in the first space 51; that is, before the negative pressure of the first space 51 is substantially affected (for example, before an air pressure sensor 14a arranged close to the air extraction module 13 detects a change occurring in the negative pressure value of the first space 51), an air pressure sensor 14b measuring the second space 52 detects a significant change occurring in the negative pressure value of the second space 52. Therefore, real-time reactive measures can be conducted earlier in time, and preferably, real-time reactive measures are conducted before a change also occurs in the negative pressure value of the first space 51.

Moreover, the present invention does not specifically define the configuration position of the connecting passage 24. In some embodiments, the connecting passage 24 can be arranged to be close to the first surface 20A of the suction disk 20; for example, a pipeline having a width of 1 mm to 10 mm and a height of 1 mm to 4 mm and being in communication with the sidewall of the first suction disk wall 21 is provided on the sidewall of the second suction disk wall 22. In one embodiment, the connecting passage 24 is close to the first surface 20A of the suction disk 20 but not close to the second surface 20B, and so the cleaning cloth 60 is not needed as an auxiliary part of the sidewall of the passage. In some embodiments, the air pressure sensor 14b is arranged on the sidewall of the second suction disk wall 22. In some embodiments, the third space 53 is not in direct communication with the connecting passage 24, and only the upper side 531 thereof is in communication with the second space 52 via the second suction disk hole 220A and the lower side 533 thereof is in communication with air of the exterior via the second cleaning cloth holes 602 of the cleaning cloth 60 when a part of the self-propelled device exceeds the board surface 40A. In some embodiments, the channel 23 can be omitted such that the third space 53 is also excluded.

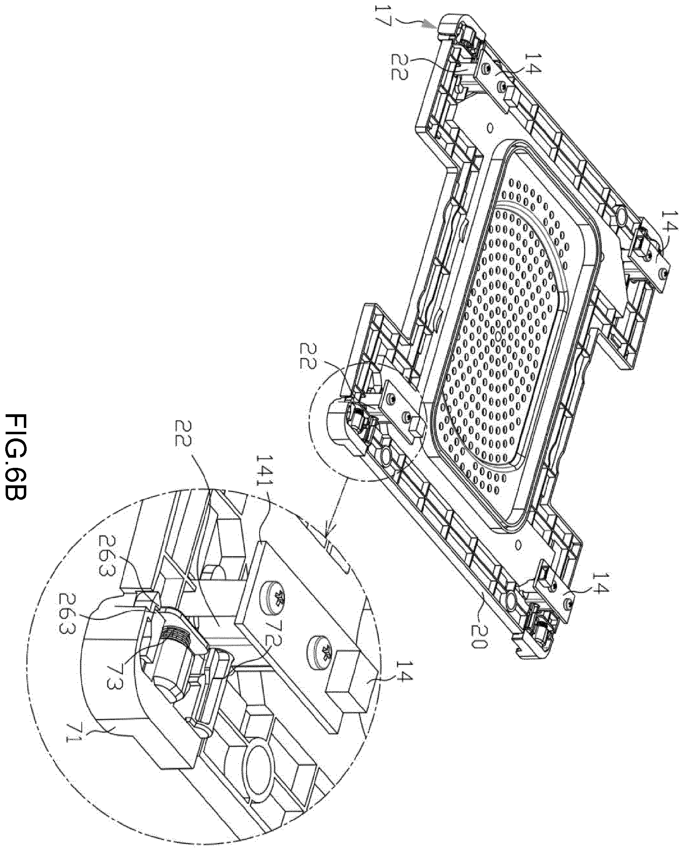

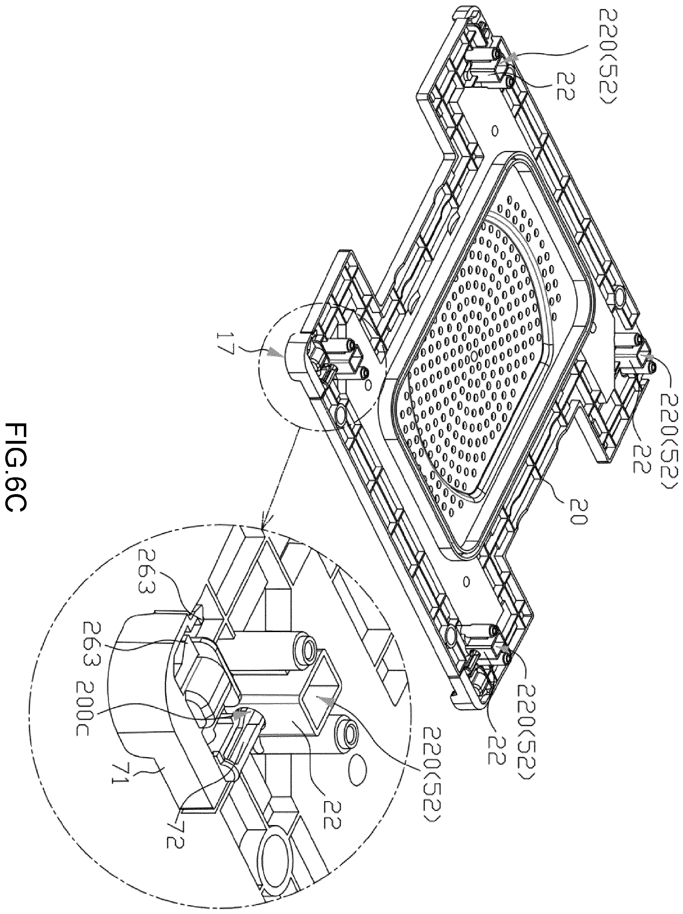

As shown in FIG. 6A, FIG. 6B and FIG. 6C, the bumper structure 17 is relatively movably arranged on the body 11, and is configured to close the second space 52 when located at the first position and open the second space 52 when located at the second position.

As shown in FIG. 6A, FIG. 6B and FIG. 6C, in one embodiment, the bumper structure 17 is arranged at the suction disk 20 of the body 11, and includes a bumper panel 71 and a blocking bar 72. An outer surface of the bumper panel 71 faces the outside of the body 11, and more specifically, the outer surface of the bumper panel 71 faces the outside of the suction disk 20. The blocking bar 72 is connected to the bumper panel 71, extends from the bumper panel 71 toward the second space 52 (the second suction disk opening 220), and closes the second space 52 (the second suction disk hole 220) when the bumper structure 17 is located at the first position (as shown in FIG. 6B). The second space 52 (the second suction disk hole 220) is open when the bumper structure 17 is located at the second position (as shown in FIG. 6C).

As shown in FIG. 1, in one embodiment, the bumper structure 17 is configured to be relatively movable on the body 11 or the suction disk 20 along a movement direction F of the self-propelled device 10. The walking components 122 and 121 are pulleys, and the long axis of the pulleys extends in the movement direction F, and the bumper structure 17 is configured to be relatively movable along the long axes of the walking components 122 and 121.

In one embodiment, the second suction wall 22 is defined with a blocking hole 200C. Moreover, the bumper structure 17 further includes an elastic element 73. The elastic element 73 is located between the suction disk 20 and the bumper panel 71, and is configured to transmit an impact force from the bumper panel 71 to the blocking bar 72 when the self-propelled device 10 bumps into an obstacle for the blocking bar 72 to move relative to the second suction disk wall 22 or the blocking hole 200C.

The bumper structure 17 may further include a first guide section 261 and a second guide section 262. The first guide section 261 is provided at the suction disk 20, and the second guide section 262 is provided at the bumper structure 17 and extends from the bumper panel 71 to the suction disk 20. The suction disk 20 and the bumper structure 17 are movable relative to each other through the guidance of the first guide section 261 and the second guide section 262. Preferably, in the embodiment in FIG. 6A, the position of the first guide section 261 corresponds to the position of the second guide section 262, and preferably, both the first guide section 261 and the second guide section 262 are shaped as long rods and have matching shapes, such that the first guide section 261 and the second guide section 262 are movable relative to each other.

In one embodiment, the second guide section 262 is two in number, and the first guide section 261 is two in number. In one embodiment, both the first guide section 261 and the second guide section 262 are long rods, and each of these guide members may further include a limiting section 263, which is arranged on a free end of the guide members. In the embodiment in FIG. 6A, the bumper structure 17 is pushed to the outside by the elastic force of the elastic element 73, such that the limiting sections 263 of the first guide section 261 and the second guide section 262 form a fitted state. At this point in time, the bumper structure 17 is located on the outside of the suction disk 20, that is, located at the first position. When the self-propelled 10 bumps into an obstacle, the impact force from the bumper panel 71 moves the bumper structure 17 toward the inside of the suction disk 20 to further move the blocking bar 72 relative to the second suction disk wall 22 or the blocking hole 200C, such that the bumper structure 17 is located at the second position. In one embodiment, the two limiting sections 263 fitted with each other may also extend from the guide members toward the outside, respectively, that is, one limiting section 263 extends in a direction toward the other limiting section 263.

As shown in FIG. 6A, the bumper structure 17 may further include a fixing pin 264 and a positioning section 265. The elastic element 73 is sleeved at the fixing pin 264, and the positioning section 265 is defined with an accommodating space for accommodating at least a portion of the elastic element 73 to thereby position the elastic element 73.

As shown in FIG. 6A, in one embodiment, the blocking bar 72 includes a blocking section 721 and a connecting section 722. The connecting section 722 is connected between the bumper panel 71 and the blocking section 721, and a cross section area of the blocking section 721 is coordinated with the area of the blocking hole 200C. When at least one bumper structure 17 is located at the first position, the blocking section 721 seals the blocking hole 200C (as shown in FIG. 6B). Moreover, the cross section area of the part of the connecting section 722 close to the blocking section 721 is smaller than the area of the blocking hole 200C. Thus, when the bumper structure 17 is located at the second position, the part of the connecting section 722 close to the blocking section 721 opens the blocking hole 200C (as shown in FIG. 6C).

In some embodiments, the negative pressure of the first space 51 maintains the ability of attracting the self-propelled device to the board 40A, and the first space 51 is in communication with the second suction disk hole 220A of the suction disk 20 to maintain the negative pressures in the second space 52 and the third space 53. When the part of the connecting section 722 close to the blocking section 721 opens the blocking hole 200C, the air flow between the second space 52 and the exterior allows the air pressure sensor 14b (as shown in FIG. 4) in the second space 52 to detect in real time a significant change occurring in the negative pressure value of the second space 52. Thus, the impact is sensed, and the location of the self-propelled device 10 can be quickly and appropriately adjusted.

In one embodiment, the cross section area of the blocking section 721 is coordinated with the area of the blocking hole 200C, and the cross section area of the blocking section 721 may be equal to or slightly smaller than the area of the blocking hole 200C. Preferably, the cross section area of the blocking section 721 is slightly smaller than the area of the blocking hole 200C. Thus, the friction between the blocking section 721 and a wall surface of the second suction disk wall 22 defining the blocking hole 200C can be reduced, allowing the bumper structure 17 to move smoothly. For example, a gap between an outer peripheral wall of the blocking section 721 and the wall surface of the second suction disk wall 22 defining the blocking hole 200C is less than 3 mm, preferably less than 2 mm, and more preferably less than 1 mm. An effect of closure is poor when the gap above is greater than 3 mm, and air leakage may become too severe. The connecting section 722 has multiple ribs 723 extending from an outer lateral surface of the blocking section 721 toward the bumper panel 71, and a gap 724 is formed between two adjacent ribs 723, such that the cross section area of the part of the connecting section 722 close to the blocking section 721 is smaller than the area of the blocking hole 200C. Thus, the gap 724 opens the blocking hole 200C to allow the second space 52 to be in communication with the environment of the exterior, and air enters the second space 52 from the gap 724 to increase the air pressure of the second space 52, allowing the air pressure sensor 14b (as shown in FIG. 4) in the second space 52 to detect in real time a significant change occurring in the negative pressure of the second space 52 to thereby sense the impact.

The structures of several specific embodiments are described as above for a person skilled in the art to better understand the various aspects of the present disclosure. It is to be understood by a person skilled in the art that, the present disclosure may be used as designs or modification for implementing other processes and structural basis for achieving the same objects and/or the same advantages as those of the embodiments described in the literature. Moreover, it is also to be understood by a person skilled in the art that, these equivalent structures do not depart from the spirit and scope of the disclosure, and various changes, modifications and substitutions may also be made to the details of the literature without departing from the spirit and scope of the present disclosure.

## Claims

1. A self-propelled device, comprising:
a body, defined with a first space and a second space in communication with the first space, wherein a volume of the second space is smaller than a volume of the first space and the second space is closer to a side of the body than the first space;
a walking module, being adjacent to the body;
an air extraction module, arranged on the body, being in communication with the first space;
an air pressure sensor, arranged on the body and disposed at one end of the second space; and
at least one bumper structure, relatively movably arranged on the body, configured to close the second space when located at a first position and open the second space when located at a second position;
wherein, the self-propelled device is for walking on a board surface.

2. The self-propelled device according to claim 1, wherein the body further comprises a connecting passage, and the second space is in communication with the first space via the connecting passage.

3. The self-propelled device according to claim 2, wherein the at least one bumper structure is arranged at the body and comprises a bumper panel and a blocking bar, an outer surface of the bumper panel faces an outside of the body, the blocking bar is connected to the bumper panel, extends from the bumper panel toward the second space, and closes the second space when the at least one bumper structure is located at the first position.

4. The self-propelled device according to claim 3, wherein the body further comprises:
a carrier board, being close to an upper part of the body, comprising a first carrier board opening; and
a suction disk, being close to a lower part of the body, connected to the carrier board,
comprising a first suction disk opening corresponding to the first carrier board opening, the suction disk and the first carrier board opening forming the first space,
wherein, the at least one bumper structure is arranged at the suction disk, and the outer surface of the bumper panel faces the outside of the suction disk.

5. The self-propelled device according to claim 4, wherein
the carrier board comprises a first carrier board wall encircling the first carrier board opening,
the suction disk comprises a first suction disk wall encircling the first suction disk opening, and the first carrier board wall and the first suction disk wall are joined with each other, such that the carrier board wall is movable relative to the first suction disk wall.

6. The self-propelled device according to claim 5, wherein
the carrier board further comprises a second carrier board opening, the suction disk comprises a second suction disk wall and a second suction disk opening, the second suction disk wall encircles the second suction disk opening, the second suction disk opening comprises a second suction disk hole passing through the suction disk, the second suction disk wall passes through the second carrier board opening,
the second suction disk wall comprises a blocking hole, and the blocking bar extends to the blocking hole.

7. The self-propelled device according to claim 6, wherein the at least one bumper structure further comprises:
an elastic element, located between the suction disk and the bumper panel, configured to cause the blocking bar of the at least one bumper structure to move relative to the blocking hole by impact from the bumper panel when the impact takes place between the self-propelled device and an obstacle.

8. The self-propelled device according to claim 7, wherein the air pressure sensor is arranged on a substrate, and the second suction disk wall is sealed by the substrate to define the second space.

9. The self-propelled device according to claim 8, further comprising:
a cleaning cloth, arranged below the suction disk, for coming into contact with the board surface, the cleaning cloth having a plurality of cleaning cloth holes respectively arranged below the first suction disk opening and the second suction disk opening, wherein, the connecting passage is arranged on a lower surface of the suction disk, and the second suction disk opening is in communication with the connecting passage.

10. The self-propelled device according to claim 6, further comprising:
a cleaning cloth, arranged below the suction disk, for coming into contact with the board surface, the cleaning cloth having a plurality of cleaning cloth holes,
wherein, the body further comprises a third space in communication with the second space, an upper side of the third space faces the lower surface of the suction disk and the third space is in communication with the second space via the second suction disk hole, a lateral side of the third space faces the connecting passage and is in communication with the connecting passage, and a lower side of the third space faces the cleaning cloth and is exposed from the cleaning cloth holes when a part of the self-propelled device exceeds the board surface.

11. The self-propelled device according to claim 2, wherein the body further comprises:
a third space, configured as: the third space is in communication with the second space, and the third space is in communication with the first space via the connecting passage; and when an edge of the self-propelled device exceeds a board surface, the second space is in communication with an exterior via the third space, and the first space is in communication with the exterior via the connecting passage and the third space.

12. The self-propelled device according to claim 10, wherein
a sum of volumes of the second space, the connecting passage and the third space is smaller than the volume of the first space,
the blocking bar comprises a blocking section and a connecting section, the connecting section is connected between the bumper panel and the blocking section,
a cross section area of the blocking section is coordinated with an area of the blocking hole, the blocking section closes the blocking hole when the at least one bumper structure is located at the first position,
a cross section area of a part of the connecting section close to the blocking section is smaller than an area of the blocking hole, and the part of the connecting section close to the blocking section opens the blocking hole when the at least one bumper structure is located at the second position.

13. A self-propelled device, comprising:
a suction disk, comprising:
a first suction disk wall, arranged at a center of the suction disk, defined with a fist suction disk opening;
a plurality of second suction disk walls, being close to edges of the suction disk, the second suction disk walls respectively defined with a plurality of second suction disk openings, the plurality of second suction disk walls define the blocking hole; and
a plurality of connecting passages, arranged on the suction disk, being in communication with the first suction disk opening and the second suction disk openings;
a plurality of bumper structures, relatively movably arranged on the suction disk, comprising:
a bumper panel, arranged to be adjacent to the edges of the suction disk; and
a blocking bar, connected to the bumper panel and extending to the blocking hole; and
a carrier board, arranged on the suction disk, comprising:
a carrier board wall, arranged at the center of the carrier board, defined with a first carrier board opening; and
a plurality of second carrier board openings, being close to edges of the carrier board, the second suction disk walls passing through the second carrier board openings;
a walking module, being adjacent to the suction disk;
a plurality of air pressure sensors, arranged on a substrate, the substrate being arranged on the carrier board and covering the second suction disk walls; and
an air extraction module, arranged on the carrier board wall of the carrier board;
wherein, the self-propelled device is for walking on a board surface.

14. The self-propelled device according to claim 13, wherein
the at least one bumper structure is configured to be movable between a first position and a second position,
the blocking bar comprises a blocking section and a connecting section, the connecting section is connected between the bumper panel and the blocking section,
a cross section area of the blocking section is coordinated with an area of the blocking hole, the blocking section closes the blocking hole when the at least one bumper structure is located at the first position,
a cross section area of a part of the connecting section close to the blocking section is smaller than an area of the blocking hole, and the part of the connecting section close to the blocking section opens the blocking hole when the at least one bumper structure is located at the second position.

15. The self-propelled device according to claim 13, further comprising:
a first space, comprising an internal space formed after the carrier board wall is joined with the first suction disk wall; and
a second space, comprising an internal space of the second suction disk wall, the second space being in communication with the first space via the connecting passage, the air pressure sensors for measuring an air pressure of the second space;
wherein, a sum of volumes of the second space and the connecting passage is smaller than a volume of the first space.

16. The self-propelled device according to claim 13, wherein the suction disk has a first surface and a corresponding second surface, the first suction disk wall and the second suction disk wall protrude from the first surface, and a height of the second suction disk wall is greater than a height of the first suction disk wall.

17. The self-propelled device according to claim 16, further comprising:
a cleaning cloth, adhered to the second surface of the suction disk, for coming into contact with the board surface;
wherein,
the second surface of the suction disk comprises a plurality of shallow grooves for providing hooks and loops for adhering with the cleaning cloth,
the suction disk further comprises a plurality of channels, the channels are close to edges of the suction disk, the second suction disk hole is provided on a bottom part of each channel, the cleaning cloth comprises a plurality of cleaning cloth holes,
the cleaning cloth holes overlap with the channels in a perpendicular direction,
the connecting passage is close to the first surface of the suction disk, and one end thereof is connected to a sidewall of the first suction disk wall and the other end thereof is connected to a sidewall of the second suction disk wall.
